(19) **Europäisches Patentamt European Patent Office Office européen des brevets**

(11) **EP 1 248 821 B1**

(12) **FASCICULE DE BREVET EUROPEEN**

(45) Date de publication et mention de la délivrance du brevet:
**08.04.2009 Bulletin 2009/15**

(21) Numéro de dépôt: **00990081.2**

(22) Date de dépôt: **20.12.2000**

(51) Int Cl.:
*C09C 3/04* *(2006.01)*    *B01F 17/00* *(2006.01)*

(86) Numéro de dépôt international:
**PCT/FR2000/003613**

(87) Numéro de publication internationale:
**WO 2001/048093 (05.07.2001 Gazette 2001/27)**

(54) **UTILISATION DE POLYMERES HYDROSOLUBLES COMME AGENT DE DISPERSION DE SUSPENSION AQUEUSE DE CARBONATE DE CALCIUM. SUSPENSIONS AQUEUSES OBTENUES ET LEURS UTILISATIONS**

VERWENDUNG VON WASSERLÖSLICHEN POLYMEREN ALS DISPERGIERMITTEL FÜR WÄSSRIGE SUSPENSIONEN AUS KALZIUMKARBONAT, SO ERHALTENE WÄSSRIGE SUSPENSIONEN UND IHRE VERWENDUNGEN

USE OF WATER SOLUBLE POLYMERS AS DISPERSION AGENT OF AQUEOUS CALCIUM CARBONATE SUSPENSION, RESULTING AQUEOUS SUSPENSIONS AND THEIR USES

(84) Etats contractants désignés:
**AT BE CH CY DE DK ES FI FR GB GR IE IT LI LU MC NL PT SE TR**

(30) Priorité: **27.12.1999 FR 9916541**

(43) Date de publication de la demande:
**16.10.2002 Bulletin 2002/42**

(73) Titulaire: **COATEX S.A.S.**
**69730 Genay (FR)**

(72) Inventeurs:
• **SUAU, Jean-Marc**
**F-69480 Lucenay (FR)**

• **JACQUEMET, Christian**
**F-69005 Lyon (FR)**
• **MONGOIN, Jacques**
**F-69550 Quincieux (FR)**

(74) Mandataire: **Richebourg, Michel François**
**Cabinet Michel Richebourg,**
**"Le Clos du Golf",**
**69, rue Saint-Simon**
**42000 Saint Etienne (FR)**

(56) Documents cités:
**EP-A- 0 892 020**

**Description**

L'invention concerne l'utilisation d'homopolymères et/ou copolymères hydrosolubles de l'acide acrylique avec un ou plusieurs monomères acryliques, vinyliques ou allyliques comme agent de dispersion de suspension aqueuse de carbonate de calcium.

L'invention concerne également lesdites suspensions aqueuses de carbonate de calcium ainsi que leurs utilisations dans les domaines du papier, comme notamment la fabrication ou le couchage du papier, de la peinture, des charges pour caoutchoucs et résines synthétiques, des formulations détergentes et nettoyantes, et tout autre domaine mettant en oeuvre lesdites suspensions telles que notamment les céramiques, les fluides de forage, les ciments, les plâtres et autres domaines d'application du génie civil, du bâtiment et des travaux publics.

Depuis longtemps déjà l'homme de l'art connaît l'utilisation d'agents de broyage et/ou de dispersion de suspension aqueuse de particules minérales constitués par des polymères et/ou copolymères acryliques, de faible poids moléculaire, totalement ou partiellement neutralisés par divers agents de neutralisation (FR 2 603 042, EP 0 100 947, EP 0 127 388, EP 0 129 329, EP 0 542 644).

L'homme de l'art connaît également l'utilisation d'agents de broyage et/ou de dispersion constitués par la fraction des polymères et/ou copolymères acryliques dont la viscosité spécifique est comprise entre 0,3 et 0,8 (brevets FR 2 488 814, EP 0 100 948, EP 0 542 643).

Mais ces divers types d'agents de broyage et/ou de dispersion de faible poids moléculaire qui permettent d'obtenir des suspensions aqueuses de particules minérales affinées et stables dans le temps ne permettent pas de remettre en suspension ou de redisperser dans l'eau des particules minérales, telles que notamment le carbonate de calcium, issues d'une étape de reconcentration mécanique et/ou thermique consécutive à une étape de broyage par voie humide sans usage de dispersant et faiblement concentrée en matière sèche. De telles particules minérales, issues de cette étape de reconcentration mécanique et/ou thermique consécutive à une étape de broyage par voie humide sans usage de dispersant, posent de gros problèmes de mise en oeuvre à l'homme du métier qui doit disperser ces particules minérales sous forme de suspension à concentration très élevée en matière sèche pour pouvoir les proposer à l'utilisateur sous une forme manipulable par ce dernier.

Confrontée à ce problème, la Demanderesse a alors trouvé, de manière surprenante que la sélection d'homopolymères de l'acide acrylique et/ou copolymères hydrosolubles de l'acide acrylique avec un ou plusieurs monomères acryliques, vinyliques ou allyliques d'un poids moléculaire différent et plus élevé que toute la littérature connue à ce jour ne l'enseigne (et notamment la demande de brevet EP 0 850 685) permet de mettre en suspension aqueuse les particules minérales issues de cette étape de reconcentration mécanique et/ou thermique consécutive à une étape de broyage par voie humide sans usage de dispersant et faiblement concentrée en matière sèche.

Ainsi, un des buts de l'invention est l'utilisation d'homopolymères de l'acide acrylique et/ou copolymères hydrosolubles de l'acide acrylique avec un ou plusieurs monomères acryliques, vinyliques ou allyliques d'un poids moléculaire correspondant à un indice de viscosité d'une valeur allant de 0,08 à 0,80, et préférentiellement de 0,20 à 0,60, comme agent de dispersion de suspension aqueuse de particules minérales issues d'une étape de reconcentration mécanique et/ou thermique consécutive à une étape de broyage par voie humide sans usage de dispersant et faiblement concentrée en matière sèche.

Par une étape de broyage par voie humide sans usage de dispersant, la Demanderesse entend une étape de broyage par voie humide sans aucun dispersant mais aussi avec éventuellement des doses d'agent floculant faibles pouvant aller jusqu'à 500 ppm.

De même, un autre but de l'invention est de fournir un agent de dispersion de suspension aqueuse de particules minérales issues d'une étape de reconcentration mécanique et/ou thermique consécutive à une étape de broyage par voie humide sans usage de dispersant et faiblement concentrée en matière sèche.

Un but supplémentaire de l'invention est de fournir un procédé de mise en suspension aqueuse desdites particules minérales mettant en oeuvre la sélection des homopolymères de l'acide acrylique et/ou copolymères hydrosolubles de l'acide acrylique avec un ou plusieurs monomères acryliques, vinyliques ou allyliques d'un poids moléculaire correspondant à un indice de viscosité d'une valeur allant de 0,08 à 0,80, et préférentiellement de 0,20 à 0,60, tels que définis dans la revendication 1.

Un autre but de l'invention, outre ceux déjà mentionnés, est de fournir des suspensions aqueuses de matières minérales affinées obtenues par le procédé précité et caractérisées en ce qu'elles contiennent de 0,1 % à 2 % en poids sec, et préférentiellement de 0,3 % à 1,0 % en poids sec par rapport au poids sec de matière minérale, d'agent de dispersion de suspension aqueuse selon l'invention.

Enfin, un but supplémentaire de l'invention concerne l'utilisation de ces suspensions aqueuses minérales dans les domaines de la charge de masse et du couchage du papier ainsi que de la peinture, de la céramique, des boues de forage, des charges pour caoutchoucs et résines synthétiques, des formulations détergentes et nettoyantes, et tout autre domaine mettant en oeuvre lesdites suspensions telles que notamment les ciments, les plâtres et autres domaines d'application du génie civil, du bâtiment et des travaux publics.

Ces buts sont atteints grâce à l'utilisation selon l'invention d'homopolymères de l'acide acrylique et/ou copolymères hydrosolubles de l'acide acrylique avec un ou plusieurs monomères acryliques, vinyliques ou allyliques d'un poids moléculaire correspondant à un indice de viscosité d'une valeur allant de 0,08 à 0,80, et préférentiellement de 0,20 à 0,60, tels que définis dans la revendication 1.

Ces homopolymères et/ou copolymères résultent des divers procédés connus de la polymérisation radicalaire mettant en oeuvre les initiateurs de polymérisation bien connus de l'homme du métier tels que par exemple des composés à base d'hydroxylamine ou encore mettant en oeuvre les initiateurs de polymérisation tels que les peroxydes comme notamment l'eau oxygénée, l'hydroperoxyde de tertiobutyle ou les persels comme notamment le persulfate de sodium, le persulfate d'ammonium, le persulfate de potassium ou analogues, ou encore l'hypophosphite de sodium, l'acide hypophosphoreux ou bien encore l'acide phosphoreux et/ou leurs sels en présence éventuelle de sels métalliques par exemple de fer ou de cuivre dans un milieu de polymérisation qui peut être l'eau, le méthanol, l'éthanol, le propanol, l'isopropanol, les butanols, ou leurs mélanges ou encore le diméthylformamide, le diméthylsulfoxyde, le tétrahydrofurane, l'acétone, la méthyléthylcétone, l'acétate d'éthyle, l'acétate de butyle, l'hexane, l'heptane, le benzène, le toluène, le xylène, et en présence éventuellement de régulateurs de masse moléculaire encore appelés agents de transfert tels que notamment le mercaptoéthanol, l'acide thioglycolique et ses esters, le n-dodécylmercaptan, les acides acétique, tartrique, lactique, citrique, gluconique, glucoheptonique, l'acide 2-mercaptopropionique, le thiodiéthanol, les solvants halogénés comme le tétrachlorure de carbone, le chloroforme, le chlorure de méthylène, les éthers de monopropylène glycol, ou leurs mélanges et analogues.

Ces homopolymères et/ou copolymères utilisés comme agent de dispersion selon l'invention résultent des divers procédés de polymérisation radicalaire précités de l'un au moins des monomères choisis parmi l'acide acrylique, l'acide méthacrylique, l'acide itaconique, l'acide crotonique, l'acide fumarique, l'acide isocrotonique, aconitique, mésaconique, sinapique, undécylénique, angélique, canellique et/ou l'acide acrylamido méthyl propane sulfonique sous forme acide ou partiellement neutralisée, ou encore parmi l'acrylamide, le méthylacrylamide, les esters des acides acryliques ou méthacryliques tels que notamment l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, le styrène sulfonate de sodium, l'isobutylène, le diisobutylène, l'acétate de vinyle, le styrène, l'alphaméthylstyrène, le vinylméthyléther, les allyliques tels que notamment l'allylamine et ses dérivés.

Ces homopolymères et/ou copolymères utilisés comme agent de dispersion selon l'invention sont partiellement ou totalement neutralisés par un ou plusieurs agents de neutralisation disposant d'une fonction monovalente et éventuellement d'une fonction polyvalente.

Les agents de neutralisation disposant d'une fonction monovalente sont choisis dans le groupe constitué par les composés contenant des cations alcalins, en particulier le sodium et le potassium, ou encore le lithium, l'ammonium, ou bien les amines primaires ou secondaires aliphatiques et/ou cycliques telles que par exemple les éthanolamines, la mono et diéthylamine ou encore la cyclohexylamine.

Les agents de neutralisation disposant d'une fonction polyvalente sont choisis dans le groupe constitué par les composés contenant des cations divalents alcalino-terreux, en particulier le magnésium et le calcium, ou encore le zinc, de même que par les cations trivalents, dont en particulier l'aluminium, ou encore par certains composés contenant des cations de valence plus élevées.

Les homopolymères et/ou copolymères destinés à être utilisés selon l'invention comme agent de dispersion dans l'eau des particules minérales issues d'une étape de reconcentration mécanique et/ou thermique consécutive à une étape de broyage par voie humide sans usage de dispersant et faiblement concentrée en matière sèche sont sélectionnés parmi les homopolymères ou copolymères ayant un poids moléculaire correspondant à un indice de viscosité d'une valeur allant de 0,08 à 0,80, et préférentiellement de 0,20 à 0,60.

Le poids moléculaire des homopolymères ou copolymères est mesuré sur la forme du polymère salifié à la soude et selon la méthode décrite ci-dessous et sera apprécié et représenté par l'indice de viscosité dans toute la suite de la présente demande.

Pour ce faire, la forme acide du composé dont il faut déterminer l'indice de viscosité est neutralisée à 100 % par la soude puis diluée à 50 g/l dans de l'eau bipermutée.

Cette solution mère, qui a alors une concentration notée $c_0$, subit les dilutions suivantes : $(2/3)\, c_0$, $(1/2)\, c_0$, $(1/3)\, c_0$, $(1/4)\, c_0$, $(1/6)\, c_0$, $(1/12)\, c_0$, $(1/18)\, c_0$, $(1/24)\, c_0$, $(1/36)\, c_0$.

On détermine alors pour chaque solution la viscosité spécifique à l'aide d'un viscosimètre Schott AVS/500 muni d'un tube de Ubbelohde de référence 53010/I et de constante 0,01 et on trace la courbe viscosité spécifique en fonction de la concentration.

La partie linéaire de la courbe permet d'obtenir l'indice de viscosité selon l'équation :

**Indice de viscosité = Limite de la viscosité spécifique lorsque la concentration tend vers zéro.**

Les substances minérales affinées et à mettre en suspension selon l'invention sont choisies parmi les carbonates de calcium synthétiques ou les carbonates de calcium naturels tels que notamment la craie, la calcite, le marbre ou encore la dolomie ou leurs mélanges.

Ainsi, l'utilisation selon l'invention d'une sélection d'homopolymères de l'acide acrylique et/ou copolymères hydrosolubles de l'acide acrylique avec un ou plusieurs monomères acryliques, vinyliques ou allyliques et la mise au point d'un agent de dispersion selon l'invention autorise la mise en suspension de substances minérales issues d'une étape de reconcentration mécanique et/ou thermique consécutive à une étape de broyage par voie humide sans usage de dispersant et faiblement concentrée en matière sèche et permet ainsi l'obtention de suspensions aqueuses de matières minérales affinées obtenues par le procédé précité et contenant ledit agent de dispersion selon l'invention.

En pratique, l'opération de dispersion ou de mise en suspension aqueuse desdites substances minérales consiste à ajouter, sous agitation, la quantité nécessaire d'agent de dispersion selon l'invention de manière à obtenir une suspension aqueuse desdites matières minérales, issues d'une étape de reconcentration mécanique et/ou thermique, présentant une concentration en matière sèche d'au moins 60 % avec une viscosité Brookfield strictement inférieure à 2000 mPa.s mesurée à 100 tours par minute immédiatement après la mise en suspension et une viscosité Brookfield strictement inférieure à 20 000 mPa.s, mesurée à 10 tours par minute après huit jours de stockage sans agitation, c'est-à-dire de manière à obtenir une suspension aqueuse desdites matières minérales fortement concentrée en matière sèche qui reste manipulable par l'utilisateur même après un stockage de plusieurs jours et sans agitation.

La portée et l'intérêt de l'invention seront mieux perçus grâce aux exemples suivants, qui ne sauraient être limitatifs :

EXEMPLE 1 :

Cet exemple concerne la sélection du poids moléculaire (exprimé par l'indice de viscosité) de l'agent de dispersion permettant la mise en suspension aqueuse de carbonate de calcium naturel broyé sans dispersant à une granulométrie dont 73 % des particules ont un diamètre inférieur à un micromètre déterminé par la mesure Sédigraph™ 5100 de la société Micromeritics et issu d'une reconcentration mécanique du type centrifugation consécutive à ce broyage en voie humide à faible concentration en matière sèche et sans dispersant. Ce carbonate de calcium naturel est un marbre.

Pour chaque essai, on a préparé la suspension aqueuse de marbre par introduction, dans le gâteau issu de la centrifugation de 0,4 % en poids sec d'agent de dispersion à tester par rapport au poids sec dudit gâteau à mettre en suspension de manière à obtenir une suspension aqueuse de carbonate de calcium à une concentration en matière sèche égale à 61 %.

Après 20 minutes d'agitation, on récupère dans un flacon un échantillon de la suspension de carbonate de calcium obtenue et on en mesure la viscosité Brookfield à l'aide d'un viscosimètre Brookfield type RVT, à une température de 25°C et une vitesse de rotation de 100 tours par minute avec le mobile adéquat.

Après un temps de 8 jours dans le flacon, la viscosité Brookfield de la suspension est mesurée par introduction, dans le flacon non agité, du mobile adéquat du viscosimètre Brookfield type RVT, à une température de 25°C et une vitesse de rotation de 10 tours par minute (viscosité AVAG = viscosité Brookfield avant agitation).

Les différents homopolymères testés sont :

Essai n° 1 :

Cet essai, qui illustre l'art antérieur, met en oeuvre un polyacrylate de sodium totalement neutralisé d'indice de viscosité égal à 0,04 mesuré selon la méthode précitée.

Essai n° 2 :

Cet essai, qui illustre l'art antérieur, met en oeuvre un polyacrylate mixte de magnésium et de sodium (50 % magnésium - 50 % sodium en mole) dont la forme salifiée à la soude possède un indice de viscosité égal à 0,04 mesuré selon la méthode précitée.

Essai n° 3 :

Cet essai, qui illustre l'art antérieur, met en oeuvre un polyacrylate de sodium totalement neutralisé d'indice de viscosité égal à 0,07 mesuré selon la méthode précitée.

Essai n° 4 :

Cet essai, qui illustre l'invention met en oeuvre un polyacrylate de sodium totalement neutralisé d'indice de viscosité égal à 0,10 mesuré selon la méthode précitée.

Essai n° 5 :

Cet essai, qui illustre l'invention met en oeuvre un polyacrylate de sodium totalement neutralisé d'indice de viscosité égal à 0,31 mesuré selon la méthode précitée.

Essai n° 6 :

Cet essai, qui illustre l'invention met en oeuvre un polyacrylate de sodium totalement neutralisé d'indice de viscosité égal à 0,39 mesuré selon la méthode précitée.

Essai n° 7 :

Cet essai, qui illustre l'invention met en oeuvre un polyacrylate de sodium totalement neutralisé d'indice de viscosité égal à 0,44 mesuré selon la méthode précitée.

Essai n° 8 :

Cet essai, qui illustre l'invention met en oeuvre un polyacrylate de sodium totalement neutralisé d'indice de viscosité égal à 0,75 mesuré selon la méthode précitée.

Essai n° 9 :

Cet essai, qui illustre un domaine hors de l'invention met en oeuvre un polyacrylate de sodium totalement neutralisé d'indice de viscosité égal à 0,83 mesuré selon la méthode précitée.

Tous les résultats expérimentaux sont consignés dans le tableau 1 suivant.

TABLEAU 1

| Essais | | Indice de viscosité | Composition (%) | | Dose (%) | Viscosité Brookfield T = 0 100 tr/min (en mPa.s) | Viscosité Brookfield T = 8J AVAG 10 tr/min (en mPa.s) |
|---|---|---|---|---|---|---|---|
| 1 | Art antérieur | 0,04 | AA | 100 | 0,4 | 6000 | 34000 |
| 2 | Art antérieur | 0,04 | AA | 100 | 0,4 | 3500 | 32000 |
| 3 | Art antérieur | 0,07 | AA | 100 | 0,4 | 2600 | 27000 |
| 4 | Invention | 0,10 | AA | 100 | 0,4 | 1800 | 19000 |
| 5 | Invention | 0,31 | AA | 100 | 0,4 | 880 | 9000 |
| 6 | invention | 0,39 | AA | 100 | 0,4 | 280 | 6000 |
| 7 | Invention | 0,44 | AA | 100 | 0,4 | 320 | 7000 |
| 8 | Invention | 0,75 | AA | 100 | 0,4 | 350 | 12000 |
| 9 | Hors invention | 0,83 | AA | 100 | 0,4 | 440 | 21000 |

(suite)

| Essais | | Indice de viscosité | Composition (%) | Dose (%) | Viscosité Brookfield T = 0 100 tr/min (en mPa.s) | Viscosité Brookfield T = 8 J AVAG 10 tr/min (en mPa.s) |
|---|---|---|---|---|---|---|
| | | | AA : Acide acrylique | | | |

T = 0 signifie viscosité Brookfield intitiale de la suspension
T = 8 J AVAG signifie viscosité Brookfield après 8 jours de stockage sans agitation

La lecture du tableau 1 permet de constater que, contrairement à toute attente de l'homme du métier, les homopolymères de l'acide acrylique ayant un indice de viscosité sélectionné dans l'intervalle compris entre 0,08 et 0,80 permettent de mettre en suspension un carbonate de calcium issu d'une reconcentration mécanique du type centrifugation consécutive à un broyage en voie humide à faible concentration en matière sèche et sans dispersant.

EXEMPLE

Cet exemple concerne l'utilisation de copolymère selon l'invention comme agent de dispersion permettant la mise en suspension aqueuse de carbonate de calcium naturel broyé sans dispersant à une granulométrie dont 73 % des particules ont un diamètre inférieur à un micromètre déterminé par la mesure Sédigraph™ 5100 de la société Micromeritics et issu d'une reconcentration mécanique du type centrifugation consécutive à ce broyage en voie humide à faible concentration en matière sèche et sans dispersant.

Ce carbonate de calcium naturel est un marbre.

Les agents de dispersion des différents essais de l'exemple sont testés avec le même matériel et le même mode opératoire que dans l'exemple précédent.

Essai n° 10 :

Cet essai, qui illustre un domaine hors de l'invention, met en oeuvre un copolymère, neutralisé à 100 % par de la soude, d'indice de viscosité égal à 0,05 mesuré selon la méthode précitée et composé, en pourcentage massique, de 70 % d'acide acrylique et 30 % d'acide méthacrylique.

Essai n° 11 :

Cet essai, qui illustre l'invention, met en oeuvre un copolymère, neutralisé à 100 % par de la soude, d'indice de viscosité égal à 0,12 mesuré selon la méthode précitée et composé, en pourcentage massique, de 70 % d'acide acrylique et 30 % d'acide méthacrylique.

Essai n° 12 :

Cet essai, qui illustre l'invention, met en oeuvre un copolymère, neutralisé à 100 % par de la soude, d'indice de viscosité égal à 0,73 mesuré selon la méthode précitée et composé, en pourcentage massique, de 70 % d'acide acrylique et 30 % d'acide méthacrylique.

Essai n° 13 :

Cet essai, qui illustre un domaine hors de l'invention, met en oeuvre un copolymère, neutralisé à 100 % par de la soude, d'indice de viscosité égal à 0,06 mesuré selon la méthode précitée et composé, en pourcentage massique, de 80 % d'acide acrylique et 20 % de phosphate de méthacrylate d'éthylène glycol.

Essai n° 14 :

Cet essai, qui illustre l'invention, met en oeuvre un copolymère, neutralisé à 100 % par de la soude, d'indice de viscosité égal à 0,08 mesuré selon la méthode précitée et composé, en pourcentage massique, de 80 % d'acide acrylique et 20 % de phosphate de méthacrylate d'éthylène glycol.

Essai n° 15 :

Cet essai, qui illustre l'invention, met en oeuvre un copolymère, neutralisé à 100 % par de la soude, d'indice de viscosité égal à 0,11 mesuré selon la méthode précitée et composé, en pourcentage massique, de 80 % d'acide acrylique et 20 % de phosphate de méthacrylate d'éthylène glycol.

Essai n° 16 :

Cet essai, qui illustre l'invention, met en oeuvre un copolymère, neutralisé à 100 % par de la soude, d'indice de viscosité égal à 0,17 mesuré selon la méthode précitée et composé, en pourcentage massique, de 80 % d'acide acrylique et 20 % de phosphate de méthacrylate d'éthylène glycol.

Essai n° 17 :

Cet essai, qui illustre l'invention, met en oeuvre un copolymère, neutralisé à 100 % par de la soude, d'indice de viscosité égal à 0,26 mesuré selon la méthode précitée et composé, en pourcentage massique, de 80 % d'acide acrylique et 20 % de phosphate de méthacrylate d'éthylène glycol.

Essai n° 18 :

Cet essai, qui illustre un domaine hors de l'invention, met en oeuvre un copolymère, neutralisé à 100 % par de la soude, d'indice de viscosité égal à 0,81 mesuré selon la méthode précitée et composé, en pourcentage massique, de 80 % d'acide acrylique et 20 % de phosphate de méthacrylate d'éthylène glycol.

Essai n° 19 :

Cet essai, qui illustre un domaine hors de l'invention, met en oeuvre un copolymère, neutralisé à 100 % par de la soude, d'indice de viscosité égal à 0,06 mesuré selon la méthode précitée et composé, en pourcentage massique, de 70 % d'acide acrylique et 30 % d'acide acrylamido méthyl propane sulfonique.

Essai n° 20 :

Cet essai, qui illustre l'invention, met en oeuvre un copolymère, neutralisé à 100 % par de la soude, d'indice de viscosité égal à 0,10 mesuré selon la méthode précitée et composé, en pourcentage massique, de 70 % d'acide acrylique et 30 % d'acide acrylamido méthyl propane sulfonique.

Essai n° 21 :

Cet essai, qui illustre l'invention, met en oeuvre un copolymère, neutralisé à 100 % par de la soude, d'indice de viscosité égal à 0,14 mesuré selon la méthode précitée et composé, en pourcentage massique, de 70 % d'acide acrylique et 30 % d'acide acrylamido méthyl propane sulfonique.

Essai n° 22 :

Cet essai, qui illustre l'invention, met en oeuvre un copolymère, neutralisé à 100 % par de la soude, d'indice de viscosité égal à 0,35 mesuré selon la méthode précitée et composé, en pourcentage massique, de 70 % d'acide acrylique et 30 % d'acide acrylamido méthyl propane sulfonique.

Essai n° 23 :

Cet essai, qui illustre l'invention, met en oeuvre un copolymère, neutralisé à 100 % par de la soude, d'indice de viscosité égal à 0,48 mesuré selon la méthode précitée et composé, en pourcentage massique, de 70 % d'acide acrylique et 30 % d'acide acrylamido méthyl propane sulfonique.

Essai n° 24 :

Cet essai, qui illustre l'invention, met en oeuvre un copolymère, neutralisé à 100 % par de la soude, d'indice de viscosité égal à 0,54 mesuré selon la méthode précitée et composé, en pourcentage massique, de 70 % d'acide acrylique et 30 % d'acide acrylamido méthyl propane sulfonique.

Essai n° 25 :

Cet essai, qui illustre un domaine hors de l'invention, met en oeuvre un copolymère, neutralisé à 100 % par de la soude, d'indice de viscosité égal à 0,07 mesuré selon la méthode précitée et composé, en pourcentage massique, de 30 % d'acide acrylique et 70 % d'acrylamide.

Essai n° 26 :

Cet essai, qui illustre l'invention, met en oeuvre un copolymère, neutralisé à 100 % par de la soude, d'indice de viscosité égal à 0,15 mesuré selon la méthode précitée et composé, en pourcentage massique, de 30 % d'acide acrylique et 70 % d'acrylamide.

Essai n° 27 :

Cet essai, qui illustre l'invention, met en oeuvre un copolymère, neutralisé à 100 % par de la soude, d'indice de viscosité égal à 0,43 mesuré selon la méthode précitée et composé, en pourcentage massique, de 30 % d'acide acrylique et 70 % d'acrylamide.

Essai n° 28 :

Cet essai, qui illustre l'invention, met en oeuvre un copolymère, neutralisé à 100 % par de la soude, d'indice de viscosité égal à 0,56 mesuré selon la méthode précitée et composé, en pourcentage massique, de 30 % d'acide acrylique et 70 % d'acrylamide.

Essai n° 29

Cet essai, qui illustre l'invention, met en oeuvre un copolymère, neutralisé à 100 % par de la soude, d'indice de viscosité égal à 0,67 mesuré selon la méthode précitée et composé, en pourcentage massique, de 30 % d'acide acrylique et 70 % d'acrylamide.

Essai n° 30 :

Cet essai, qui illustre l'invention, met en oeuvre un copolymère, neutralisé à 100 % par la soude, d'indice de viscosité égal à 0,33 mesuré selon la méthode précitée et composé, en pourcentage massique, de 70 % d'acide acrylique et 30 % de méthacrylamide.

Essai n° 31 :

Cet essai, qui illustre l'invention, met en oeuvre un copolymère, neutralisé à 100 % par la soude, d'indice de viscosité égal à 0,28 mesuré selon la méthode précitée et composé, en pourcentage massique, de 70 % d'acide acrylique et 30 % de styrène sulfonate de sodium.

Essai n° 32 :

Cet essai, qui illustre l'invention, met en oeuvre un copolymère, neutralisé à 100 % par la soude, d'indice de viscosité égal à 0,48 mesuré selon la méthode précitée et composé, en pourcentage massique, de 80 % d'acide acrylique et 20 % de vinylpyrrolidone.

Tous les résultats expérimentaux sont consignés dans le tableau 2 suivant.

TABLEAU 2

| Essais | | Indice de viscosité | Composition (%) | | | | Dose (%) | Viscosité Brookfield T = 0 100 tr/min (en mPa.s) | Viscosité Brookfield T = 8J AVAG 10 tr/min (en mPa.s) |
|---|---|---|---|---|---|---|---|---|---|
| 10 | Hors invention | 0,05 | AA | 70 | AMA | 30 | 0,4 | 2300 | 19000 |
| 11 | Invention | 0,12 | AA | 70 | AMA | 30 | 0,4 | 1260 | 15000 |
| 12 | Invention | 0,73 | AA | 70 | AMA | 30 | 0,4 | 600 | 9000 |
| 13 | Hors invention | 0,06 | AA | 80 | PO$_4$MAEG | 20 | 0,4 | 1200 | 22000 |
| 14 | Invention | 0,08 | AA | 80 | PO$_4$MAEG | 20 | 0,4 | 730 | 8000 |
| 15 | Invention | 0,11 | AA | 80 | PO$_4$MAEG | 20 | 0,4 | 600 | 7000 |
| 16 | Invention | 0,17 | AA | 80 | PO$_4$MAEG | 20 | 0,4 | 420 | 9000 |
| 17 | Invention | 0,26 | AA | 80 | PO$_4$MAEG | 20 | 0,4 | 450 | 8000 |
| 18 | Hors invention | 0,81 | AA | 80 | PO$_4$MAEG | 20 | 0,4 | 550 | 33000 |
| 19 | Hors invention | 0,06 | AA | 70 | AMPS | 30 | 0,4 | 1150 | 22000 |
| 20 | Invention | 0,10 | AA | 70 | AMPS | 30 | 0,4 | 850 | 9000 |
| 21 | Invention | 0,14 | AA | 70 | AMPS | 30 | 0,4 | 670 | 9000 |
| 22 | Invention | 0,35 | AA | 70 | AMPS | 30 | 0,4 | 540 | 5000 |
| 23 | Invention | 0,48 | AA | 70 | AMPS | 30 | 0,4 | 520 | 10000 |
| 24 | Invention | 0,54 | AA | 70 | AMPS | 30 | 0,4 | 700 | 16000 |
| 25 | Hors invention | 0,07 | AAM | 70 | AA | 30 | 0,4 | Dispersion impossible | |
| 26 | Invention | 0,15 | AAM | 70 | AA | 30 | 0,4 | 1440 | 11000 |
| 27 | Invention | 0,43 | AAM | 70 | AA | 30 | 0,4 | 868 | 10450 |
| 28 | Invention | 0,56 | AAM | 70 | AA | 30 | 0,4 | 780 | 10000 |
| 29 | Invention | 0,67 | AAM | 70 | AA | 30 | 0,4 | 800 | 12000 |
| 30 | Invention | 0,33 | AA | 70 | MAAM | 30 | 0,4 | 550 | 11000 |
| 31 | Invention | 0,28 | AA | 70 | SSNa | 30 | 0,4 | 700 | 10500 |
| 32 | Invention | 0,48 | AA | 80 | VP | 20 | 0,4 | 900 | 11000 |

AA : Acide acrylique PO$_4$MAEG Phosphate de méthacrylate d'éthylène glycol AAM : Acrylamide MAAM : Méthacrylamide AMA : Acide méthacrylique SSNa : Styrène sulfonate de sodium AMPS : Acide 2 acrylamido 2 méthyle propane sulfonique VP : Vinylpyrrolidone T = 0 signifie viscosité Brookfield intitiale de la suspension T = 8 J AVAG signifie viscosité Brookfield après 8 jours de stockage sans agitation

La lecture du tableau 2 permet de constater que les copolymères de l'acide acrylique ayant un indice de viscosité sélectionné dans l'intervalle compris entre 0,08 et 0,80 permettent de mettre en suspension un carbonate de calcium issu d'une reconcentration mécanique du type centrifugation consécutive à un broyage en voie humide à faible concentration en matière sèche et sans dispersant.

EXEMPLE 3 :

Cet exemple concerne l'utilisation de copolymère selon l'invention comme agent de dispersion permettant la mise en suspension aqueuse de carbonate de calcium naturel broyé sans dispersant à une granulométrie dont 61 % des particules ont un diamètre inférieur à un micromètre déterminé par la mesure Sédigraph™ 5100 de la société Micromeritics et issu d'une reconcentration mécanique du type centrifugation consécutive à ce broyage en voie humide à faible concentration en matière sèche et sans dispersant.

Ce carbonate de calcium naturel est une craie.

Les agents de dispersion des différents essais de l'exemple sont testés avec le même matériel et le même mode opératoire que dans l'exemple précédent, à l'exception de la teneur en matière sèche de la suspension aqueuse de carbonate de calcium obtenue qui est de 62 % au lieu de 61 % et à l'exception de l'essai n° 39, où 1,0 % en poids sec d'agent dispersant est testé.

Essai n° 33 :

Cet essai, qui illustre l'invention, met en oeuvre un copolymère, neutralisé à 100 % par de la soude, d'indice de viscosité égal à 0,15 mesuré selon la méthode précitée et composé, en pourcentage massique, de 80 % d'acide acrylique et 20 % d'acide itaconique.

Essai n° 34 :

Cet essai, qui illustre l'invention, met en oeuvre un copolymère, neutralisé à 100 % par de la soude, d'indice de viscosité égal à 0,73 mesuré selon la méthode précitée et composé, en pourcentage massique, de 70 % d'acide acrylique et 30 % d'acrylate d'éthyle.

Essai n° 35 :

Cet essai, qui illustre l'invention, met en oeuvre un copolymère, neutralisé à 100 % par de la soude, d'indice de viscosité égal à 0,21 mesuré selon la méthode précitée et composé, en pourcentage massique, de 70 % d'acide acrylique et 30 % d'acide méthacrylique.

Essai n° 36 :

Cet essai, qui illustre l'invention, met en oeuvre un copolymère, neutralisé à 100 % par de la soude, d'indice de viscosité égal à 0,42 mesuré selon la méthode précitée et composé, en pourcentage massique, de 70 % d'acide acrylique et 30 % d'acide méthacrylique.

Essai n° 37 :

Cet essai, qui illustre l'invention, met en oeuvre un copolymère, neutralisé à 100 % par de la soude, d'indice de viscosité égal à 0,70 mesuré selon la méthode précitée et composé, en pourcentage massique, de 70 % d'acide acrylique et 30 % d'acide méthacrylique.

Essai n° 38 :

Cet essai, qui illustre l'invention, met en oeuvre un copolymère, neutralisé à 100 % par de la soude, d'indice de viscosité égal à 0,11 mesuré selon la méthode précitée et composé, en pourcentage massique, de 80 % d'acide acrylique et 20 % d'allylamine.

Essai n° 39 :

Cet essai, qui illustre l'invention, met en oeuvre un copolymère, neutralisé à 100 % par la soude, d'indice de viscosité égal à 0,10 mesuré selon la méthode précitée et composé, en pourcentage massique, de 15 % d'acide acrylique, 60 % d'acide méthacrylique, 12,5 % de styrène et 12,5 % d'acrylate de butyle.

Essai n° 40 :

Cet essai, qui illustre l'invention, met en oeuvre un copolymère, neutralisé à 100 % par la soude, d'indice de viscosité égal à 0,54 mesuré selon la méthode précitée et composé, en pourcentage massique, de 90 % d'acide acrylique et 10 % d'acétate de vinyle.

Essai n° 41 :

Cet essai, qui illustre l'invention, met en oeuvre un copolymère, neutralisé à 100 % par la soude, d'indice de viscosité égal à 0,22 mesuré selon la méthode précitée et composé, en pourcentage massique, de 85 % d'acide acrylique et 15 % de méthacrylate de méthyle.

Tous les résultats expérimentaux sont consignés dans le tableau 3 suivant.

TABLEAU 3

| Essais | | Indice de viscosité | Composition (%) | | | | Dose (%) | Viscosité Brookfield T = 0 100 tr/min (en mPa.s) | Viscosité Brookfield T = 8J AVAG 10 tr/min (en mPa.s) |
|---|---|---|---|---|---|---|---|---|---|
| 33 | **Invention** | 0,15 | AA | 80 | AITC | 20 | 0,4 | 225 | 7000 |
| 34 | **Invention** | 0,73 | AA | 70 | AE | 30 | 0,4 | 960 | 16000 |
| 35 | **Invention** | 0,21 | AA | 70 | AMA | 30 | 0,4 | 1100 | 12000 |
| 36 | **Invention** | 0,42 | AA | 70 | AMA | 30 | 0,4 | 850 | 13500 |
| 37 | **Invention** | 0,70 | AA | 70 | AMA | 30 | 0,4 | 655 | 10000 |
| 38 | **Invention** | 0,11 | AA | 80 | ALLYL | 20 | 0,4 | 655 | 10000 |
| 39 | **Invention** | 0,10 | AA | 15 | AMA | 60 | 1,0 | 800 | 10000 |
| | | | STY | 12,5 | ABu | 12,5 | | | |
| 40 | **Invention** | 0,54 | AA | 90 | AcV | 10 | 0,4 | 600 | 13000 |
| 41 | **Invention** | 0,22 | AA | 85 | MAM | 15 | 0,4 | 1250 | 15000 |

AA : Acide acrylique
AMA : Acide méthacrylique
AE : Acrylate d'éthyle
AITC : Acide itaconique
ALLYL : Allylamine
STY : Styrène
ABu : Acrylate de butyle
AcV : Acétate de vinyle
MAM : Méthacrylate de méthyle
T = 0 signifie viscosité Brookfield intitiale de la suspension
T = 8 J AVAG signifie viscosité Brookfield après 8 jours de stockage sans agitation

La lecture du tableau 3 permet de constater que les copolymères de l'acide acrylique ayant un indice de viscosité sélectionné dans l'intervalle compris entre 0,08 et 0,80 permettent de mettre en suspension un carbonate de calcium issu d'une reconcentration mécanique du type centrifugation consécutive à un broyage en voie humide à faible concentration en matière sèche et sans dispersant, et de granulométrie différente de celle de l'exemple 2.

EXEMPLE 4 :

Cet exemple concerne le taux de polymère utilisé comme agent de dispersion permettant la mise en suspension aqueuse de carbonate de calcium naturel broyé sans dispersant à une granulométrie dont 61 % des particules ont un diamètre inférieur à un micromètre déterminé par la mesure Sédigraph™ 5100 de la société Micromeritics et issu d'une reconcentration mécanique du type centrifugation consécutive à ce broyage en voie humide à faible concentration en matière sèche et sans dispersant.

Ce carbonate de calcium naturel est un marbre.

Pour cet essai (l'essai n° 42), on a préparé la suspension aqueuse de marbre par introduction, dans le gâteau issu de la centrifugation de 2,0 % en poids sec, par rapport au poids sec dudit gâteau à mettre en suspension, d'un copolymère neutralisé à 100 % par de la soude d'indice de viscosité égal à 0,13 mesuré selon la méthode précitée et composé, en pourcentage massique, de 41 % de styrène, 15 % d'acrylate de butyle, 36 % d' acide méthacrylique et de 8 % d'acide acrylique, de manière à obtenir une suspension aqueuse de carbonate de calcium à une concentration en matière sèche égale à 62 %.

Après 20 minutes d'agitation, on récupère dans un flacon un échantillon de la suspension de carbonate de calcium obtenue et on en mesure la viscosité Brookfield à l'aide d'un viscosimètre Brookfield type RVT, à une température de 25°C et une vitesse de rotation de 100 tours par minute avec le mobile adéquat.

On obtient le résultat suivant : Viscosité Brookfield égale à 1550 mPa.s.

Après un temps de 8 jours dans le flacon, la viscosité Brookfield de la suspension est mesurée par introduction, dans le flacon non agité, du mobile adéquat du viscosimètre Brookfield type RVT, à une température de 25°C et une vitesse de rotation de 10 tours par minute avec le mobile adéquat (viscosité AVAG = viscosité Brookfield avant agitation).

On obtient le résultat suivants: Viscosité Brookfield égale à 3000 mPa.s.

EXEMPLE 5 :

Cet exemple concerne le taux de neutralisation ainsi que la nature de la neutralisation du polymère utilisé comme agent de dispersion permettant la mise en suspension aqueuse de carbonate de calcium naturel broyé sans dispersant à une granulométrie dont 73 % des particules ont un diamètre inférieur à un micromètre déterminé par la mesure Sédigraph™ 5100 de la société Micromeritics et issu d'une reconcentration mécanique du type centrifugation consécutive à ce broyage en voie humide à faible concentration en matière sèche et sans dispersant.

Ce carbonate de calcium naturel est un marbre.

Pour chaque essai, on a préparé la suspension aqueuse de marbre par introduction, dans le gâteau issu de la centrifugation de 0,8 % en poids sec d'agent de dispersion à tester par rapport au poids sec dudit gâteau à mettre en suspension de manière à obtenir une suspension aqueuse de carbonate de calcium à une concentration en matière sèche égale à 63 %.

Après 20 minutes d'agitation, on récupère dans un flacon un échantillon de la suspension de carbonate de calcium obtenue et on en mesure la viscosité Brookfield à l'aide d'un viscosimètre Brookfield type RVT, à une température de 25°C et une vitesse de rotation de 100 tours par minute avec le mobile adéquat.

Après un temps de 8 jours dans le flacon, la viscosité Brookfield de la suspension est mesurée par introduction, dans le flacon non agité, du mobile adéquat du viscosimètre Brookfield type RVT, à une température de 25°C et une vitesse de rotation de 10 tours par minute (viscosité AVAG = viscosité Brookfield avant agitation).

Les différents homopolymères de l'acide acrylique testés sont :

Essai n° 43 :

Cet essai, qui illustre l'invention, met en oeuvre un polyacrylate mixte de calcium et de sodium (15 % calcium - 85 % sodium en mole) dont la forme salifiée à la soude possède un indice de viscosité égal à 0,39 mesuré selon la méthode précitée.

Essai n° 44 :

Cet essai, qui illustre l'invention, met en oeuvre un polyacrylate mixte de magnésium et de sodium (15 % magnésium - 85 % sodium en mole) dont la forme salifiée à la soude possède un indice de viscosité égal à 0,39 mesuré selon la méthode précitée.

Essai n° 45 :

Cet essai, qui illustre l'invention, met en oeuvre un polyacrylate partiellement neutralisé à la soude (80 % molaire) d'indice de viscosité égal à 0,39 mesuré selon la méthode précitée.

Essai n° 46 :

Cet essai, qui illustre l'invention, met en oeuvre un polyacrylate mixte de calcium et de sodium partiellement neutralisé (15 % calcium - 65 % sodium en mole) dont la forme salifiée à la soude possède un indice de viscosité égal à 0,39 mesuré selon la méthode précitée.

Essai n° 47 :

Cet essai, qui illustre l'invention, met en oeuvre un polyacrylate mixte de magnésium et de sodium partiellement neutralisé (15 % magnésium - 65 % sodium en mole) dont la forme salifiée à la soude possède un indice de viscosité égal à 0,39 mesuré selon la méthode précitée.

Tous les résultats expérimentaux sont consignés dans le tableau 4 suivant.

TABLEAU 4

| Essais | | Neutralisation | | | | Dose (%) | Viscosité Brookfield T = 0 100 tr/min (en mPa.s) | Viscosité Brookfield T = 8J AVAG 10 tr/min (en mPa.s) |
|---|---|---|---|---|---|---|---|---|
| 43 | Invention | 85% | Na | 15% | Ca | 0,8 | 840 | 8000 |
| 44 | Invention | 85% | Na | 15% | Mg | 0,8 | 870 | 10000 |
| 45 | Invention | 80% | Na | - | | 0,8 | 1020 | 7000 |
| 46 | Invention | 65% | Na | 15% | Ca | 0,8 | 920 | 5000 |
| 47 | Invention | 65% | Na | 15% | Mg | 0,8 | 1550 | 6000 |
| T = 0 signifie viscosité Brookfield intitiale de la suspension  T = 8 J AVAG signifie viscosité Brookfield après 8 jours de stockage sans agitation | | | | | | | | |

La lecture du tableau 4 permet de constater que les homopolymères de l'acide acrylique ayant un indice de viscosité sélectionné dans l'intervalle compris entre 0,08 et 0,80, qu'ils soient partiellement ou totalement neutralisés par au moins un agent de neutralisation disposant d'une fonction monovalente et éventuellement par un agent disposant d'une fonction polyvalente, permettent de mettre en suspension un carbonate de calcium issu d'une reconcentration mécanique du type centrifugation consécutive à un broyage en voie humide à faible concentration en matière sèche et sans dispersant.

EXEMPLE 6 :

Cet exemple concerne la nature de l'agent de neutralisation, disposant d'une fonction monovalente, du polymère utilisé comme agent de dispersion permettant la mise en suspension aqueuse de carbonate de calcium naturel broyé sans dispersant à une granulométrie dont 73 % des particules ont un diamètre inférieur à un micromètre déterminé par la mesure Sédigraph™ 5100 de la société Micromeritics et issu d'une reconcentration mécanique du type filtre-presse consécutive à ce broyage en voie humide à faible concentration en matière sèche et sans dispersant.

Ce carbonate de calcium naturel est un marbre.

Pour chaque essai, on a préparé la suspension aqueuse de marbre par introduction, dans le gâteau issu de la filtration de 0,4 % en poids sec d'agent de dispersion à tester par rapport au poids sec dudit gâteau à mettre en suspension de manière à obtenir une suspension aqueuse de carbonate de calcium à une concentration en matière sèche égale à 63 %.

Après 20 minutes d'agitation, on récupère dans un flacon un échantillon de la suspension de carbonate de calcium obtenue et on en mesure la viscosité Brookfield à l'aide d'un viscosimètre Brookfield type RVT, à une température de 25°C et une vitesse de rotation de 100 tours par minute avec le mobile adéquat.

Après un temps de 8 jours dans le flacon, la viscosité Brookfield de la suspension est mesurée par introduction, dans le flacon non agité, du mobile adéquat du viscosimètre Brookfield type RVT, à une température de 25°C et une vitesse de rotation de 10 tours par minute (viscosité AVAG = viscosité Brookfield avant agitation).

Les différents homopolymères de l'acide acrylique testés sont :

Essai n° 48 :

Cet essai, qui illustre l'invention, met en oeuvre un polyacrylate de potassium totalement neutralisé dont la forme salifiée à la soude possède un indice de viscosité égal à 0,39 mesuré selon la méthode précitée.

Essai n° 49 :

Cet essai, qui illustre l'invention, met en oeuvre un polyacrylate de lithium totalement neutralisé dont la forme salifiée à la soude possède un indice de viscosité égal à 0,39 mesuré selon la méthode précitée.

Essai n° 50 :

Cet essai, qui illustre l'invention, met en oeuvre un polyacrylate d'ammonium totalement neutralisé dont la forme salifiée à la soude possède un indice de viscosité égal à 0,39 mesuré selon la méthode précitée.

Tous les résultats expérimentaux sont consignés dans le tableau 5 suivant.

TABLEAU 5

| Essais | | Neutralisation | | Dose (%) | Viscosité Brookfield T = 0 Viscosité 100 tr/min (en mPa.s) | Brookfield T = 8j AVAG 10 tr/min (en mPa.s) |
|---|---|---|---|---|---|---|
| 48 | Invention | 100% | KOH | 0,4 | 130 | 8000 |
| 49 | Invention | 100% | LiOH | 0,4 | 180 | 3500 |
| 50 | Invention | 100% | NH$_4$OH | 0,4 | 120 | 6000 |

T = 0 signifie viscosité Brookfield intitiale de la suspension T = 8 J AVAG signifie viscosité Brookfield après 8 jours de stockage sans agitation

La lecture du tableau 5 permet de constater que les homopolymères de l'acide acrylique ayant un indice de viscosité sélectionné dans l'intervalle compris entre 0,08 et 0,80, permettent de mettre en suspension un carbonate de calcium issu d'une reconcentration mécanique du type filtre-presse consécutive à un broyage en voie humide à faible concentration en matière sèche et sans dispersant quelle que soit la nature de l'agent de neutralisation disposant d'une fonction monovalente.

EXEMPLE 7 :

Cet exemple concerne l'utilisation de polymère selon l'invention comme agent de dispersion permettant la mise en suspension aqueuse de carbonate de calcium naturel broyé sans dispersant à une granulométrie dont 73 % des particules ont un diamètre inférieur à un micromètre déterminé par la mesure Sédigraph™ 5100 de la société Micromeritics et issu d'une reconcentration thermique consécutive à ce broyage en voie humide à faible concentration en matière sèche et sans dispersant.

Ce carbonate de calcium naturel est un marbre.

Pour cet essai (essai n° 51), on a préparé la suspension aqueuse de marbre par introduction, dans la suspension reconcentrée thermiquement, de 1,0 % en poids sec, par rapport au poids sec dudit gâteau à mettre en suspension, d'un polyacrylate de sodium totalement neutralisé d'indice de viscosité égal à 0,39 mesuré selon la méthode précitée, de manière à obtenir une suspension aqueuse de carbonate de calcium à une concentration en matière sèche égale à 72 %.

Après 20 minutes d'agitation, on récupère dans un flacon un échantillon de la suspension de carbonate de calcium obtenue et on en mesure la viscosité Brookfield à l'aide d'un viscosimètre Brookfield type RVT, à une température de 25°C et une vitesse de rotation de 100 tours par minute avec le mobile adéquat.

On obtient le résultat suivant : Viscosité Brookfield égale à 700 mPa.s

Après un temps de 8 jours dans le flacon, la viscosité Brookfield de la suspension est mesurée par introduction, dans le flacon non agité, du mobile adéquat du viscosimètre Brookfield type RVT, à une température de 25°C et une vitesse de rotation de 10 tours par minute avec le mobile adéquat (viscosité AVAG = viscosité Brookfield avant agitation).

On obtient le résultat suivant : Viscosité Brookfield égale à 11000 mPa.s.

Ce résultat permet de constater que les polymères de l'acide acrylique ayant un indice de viscosité sélectionné dans l'intervalle compris entre 0,08 et 0,80, permettent de mettre en suspension, fortement concentrée en matière sèche, un carbonate de calcium issu d'une reconcentration thermique consécutive à un broyage en voie humide à faible concentration en matière sèche et sans dispersant.

EXEMPLE 8 :

Cet exemple concerne l'utilisation de polymère selon l'invention comme agent de dispersion permettant la mise en suspension aqueuse de carbonate de calcium naturel broyé sans dispersant à une granulométrie dont 73 % des particules ont un diamètre inférieur à un micromètre déterminé par la mesure Sédigraph™ 5100 de la société Micromeritics et issu d'une reconcentration mécanique du type centrifugation suivie d'une reconcentration thermique consécutive à ce broyage en voie humide à faible concentration en matière sèche et sans dispersant.

Ce carbonate de calcium naturel est un marbre.

Pour cet essai (essai n° 52), on a préparé la suspension aqueuse de marbre par introduction, dans le gâteau issu de la reconcentration mécanique puis thermique de 0,8 % en poids sec, par rapport au poids sec dudit gâteau à mettre en suspension, d'un copolymère totalement neutralisé à la soude, d'indice de viscosité égal à 0,15 et composé de 80 % en poids d'acide acrylique et 20 % en poids d'acide itaconique, de manière à obtenir une suspension aqueuse de carbonate de calcium à une concentration en matière sèche égale à 72 %.

Après 20 minutes d'agitation, on récupère dans un flacon un échantillon de la suspension de carbonate de calcium obtenue et on en mesure la viscosité Brookfield à l'aide d'un viscosimètre Brookfield type RVT, à une température de 25°C et une vitesse de rotation de 100 tours par minute avec le mobile adéquat.

On obtient le résultat suivant : viscosité Brookfield (100 tours par minute) = 390 mPa.s

Après un temps de 8 jours dans le flacon, la viscosité Brookfield de la suspension est mesurée par introduction, dans le flacon non agité, du mobile adéquat du viscosimètre Brookfield type RVT, à une température de 25°C et une vitesse de rotation de 10 tours par minute (viscosité AVAG = viscosité Brookfield avant agitation).

On obtient le résultat suivant : viscosité Brookfield (10 tours par minute) = 4 000 mPa.s.

Ce résultat permet de constater que le copolymère acide acrylique/acide itaconique ayant un indice de viscosité sélectionné dans l'intervalle compris entre 0,08 et 0,80, permet de mettre en suspension, fortement concentrée en matière sèche, un carbonate de calcium issu d'une reconcentration mécanique puis thermique consécutive à un broyage en voie humide à faible concentration en matière sèche et sans dispersant.

EXEMPLE 9 :

Cet exemple concerne l'utilisation des suspensions aqueuses de charges minérales selon l'invention dans la fabrication de sauce de couchage du papier.

Dans ce but, on prépare les sauces de couchage en mélangeant dans l'eau, les suspensions aqueuses de carbonate de calcium à tester avec les autres constituants de la sauce de couchage dont la composition en poids est :

100 parts de suspension aqueuse à tester à 65 % en matière sèche
12 parts d'un latex styrène-butadiène carboxylé commercialisé sous le nom DL 905 par la société Dow Chemical
0,5 parts de carboxyméthylcellulose commercialisé sous le nom de Finnfix 5 par la société Metsa Serla
la teneur en matière sèche est de l'ordre de 64,5 % et le pH égal à 8,4.

Les sauces de couchage ainsi préparées sont alors soumises aux mesures de viscosité Brookfield à température ambiante et à 20 tours/minute, 50 tours par minute et 100 tours par minute au moyen d'un viscosimètre Brookfield type DVII équipé du mobile adéquat.

Essai n° 53 :

Cet essai, illustre l'invention et met en oeuvre la suspension aqueuse de carbonate de calcium selon l'essai n° 6.

Tous les résultats expérimentaux sont consignés dans le tableau 6 suivant.

TABLEAU 6

|  | Essai n° | Viscosité | Brookfield | en mPa.s |
|---|---|---|---|---|
|  |  | 20 t/min | 50 t/min | 100 t/min |
| Invention | 53 | 3650 | 2000 | 1590 |

La lecture du tableau 6 permet de voir qu'une quelconque suspension aqueuse de carbonate de calcium selon l'invention peut être utilisée dans la fabrication de sauce de couchage du papier.

EXEMPLE 10 :

Cet exemple concerne l'utilisation des suspensions aqueuses de charges minérales selon l'invention comme charge de masse du papier.

Pour ce faire, on réalise les feuilles de papier à partir d'une pulpe de cellulose de degré SR 23 contenant une pâte au sulfate sans bois et des fibres constituées à 80 % de bouleau et 20 % de pin. On dilue alors 45 g sec de cette pulpe dans 10 litres d'eau en présence de environ 15 g sec de la composition de carbonate de calcium à tester pour obtenir expérimentalement une teneur en charge de 20 %. Après 15 minutes d'agitation et l'ajout de 0,06 % en poids sec par rapport au poids sec de papier d'un agent rétenteur du type polyacrylamide, on forme une feuille de grammage égal à 75 g/m$^2$ et chargée à 20 %. Le dispositif mis en oeuvre pour former la feuille est un système Rapid-Köthen modèle 20.12 MC de Haage.

Les feuilles ainsi formées sont séchées pendant 400 secondes à 92°C et un vide de 940 mbar. La teneur en charge est contrôlée par analyse des cendres.

On détermine alors, selon la norme DIN 53146, la valeur d'opacité de la feuille de papier obtenue.

Essai n° 54 :

Cet essai, illustre l'invention et met en oeuvre la suspension aqueuse de carbonate de calcium selon l'essai n° 6. L'opacité, déterminée selon la norme DIN 53146, est égale à 88.

La lecture de cette valeur d'opacité permet de constater qu'une quelconque suspension aqueuse de carbonate de calcium selon l'invention peut être utilisée comme charge de masse dans la fabrication du papier.

EXEMPLE 11 :

Cet exemple concerne l'utilisation des suspensions aqueuses de charges minérales selon l'invention dans le domaine de la peinture et plus particulièrement dans une formulation peinture aqueuse satinée. Pour ce faire, on réalise l'essai n°55, qui illustre l'invention.

Pour cet essai, on introduit successivement les constituants de ladite peinture aqueuse satinée qui sont :

| | |
|---|---|
| 40 g | de monopropylène glycol |
| 2 g | d'un biocide commercialisé par la société TROY sous le nom de MERGAL™ K6N |
| 1 g | d'un antimousse commercialisé par la société HENKEL sous le nom de Nopco™ NDW |
| 217,4 g | de la suspension aqueuse de carbonate de calcium de l'essai n° 6 concentrée à 65 % en matière sèche |
| 200 g | d'oxyde de titane rutile commercialisé par la société MILLENNIUM sous le nom TIONA™ RL 68 |
| 450 g | d'un liant styrène-acrylique en dispersion commercialisé par la société RHODIA sous le nom de RHODOPAS™ DS 910 |
| 30 g | de butyldiglycol |
| 1 g | de Nopco™ NDW |
| 3 g | d'ammoniaque à 28 % |
| 4 g | d'un épaississant commercialisé par COATEX sous le nom de COATEX BR100 P |
| 49,6 g | d'eau |

Après quelques minutes d'agitation de la composition aqueuse ainsi réalisée, à pH égal à 8,5, on mesure les viscosités Brookfield de la composition à 25°C, à 10 tours par minute et 100 tours par minute à l'aide d'un viscosimètre Brookfield type RVT équipé du mobile adéquat.

La stabilité rhéologique dans le temps et en température de la formulation est déterminée par la mesure des viscosités Brookfield à 10 tours par minute et 100 tours par minute et à 25°C de cette formulation après un stockage sans agitation de 24 heures à température ambiante, puis après un stockage d'une semaine à température ambiente.

Elle est également déterminée par la viscosité ICI, qui est la viscosité à haut gradient de vitesse de cisaillement ($10000 \, s^{-1}$) mesurée à l'aide d'un viscosimètre cone plan.

On mesure également la viscosité Stormer (KU) exprimée en Krebs Unit déterminée à l'aide d'un viscosimètre Stormer.

Les résultats obtenus pour ces différentes mesures sont :

A t = 0, viscosité Brookfield 10 T/min = 4000 mPa.s
A t = 0, viscosité Brookfield 100 T/min= 2200 mPa.s
viscosité ICI = 160 mPa.s
viscosité KU Stormer = 97 KU
A t = 24 heures, viscosité Brookfield à 10 T/min = 8400 mPa.s
A t = 24 heures, viscosité Brookfield à 100 T/ min = 4700 mPa.s
viscosité ICI = 130 mPa.s
viscosité KU Stormer = 121 KU
A t = 8 jours, viscosité Brookfield 100 T/min = 8200 mPa.s
A t = 8 jours viscosité Brookfield 100 T/min = 4600 mPa.s
viscosité ICI =130 mPa.s
viscosité KU Stormer = 121 KU

La lecture de ces valeurs permet de constater qu'une quelconque suspension aqueuse de carbonate de calcium selon l'invention peut être utilisée dans le domaine de la peinture.

**Revendications**

1. Agent de dispersion de suspension aqueuse de particules minérales issues d'une étape de reconcentration mécanique et/ou thermique consécutive à une étape de broyage par voie humide sans usage de dispersant et faiblement concentrée en matière sèche **caractérisé en ce que** ledit agent est un homopolymère, de l'acide acrylique ou un copolymère hydrosoluble de l'acide acrylique avec un ou plusieurs monomères acryliques, vinyliques ou allyliques ayant un indice de viscosité d'une valeur allant de 0,08 à 0,80, l'indice de viscosité étant détermine à l'aide d'un viscosimètre Schott AVS/500 muni d'un tube de Ubbelohde de référence 53010/I et de constante 0,01, et correspondant à la limite de la viscosité spécifique de la solution d'homopolymère ou copolymère_lorsque la concentration en homopolymère ou copolymère tend vers 0, la forme acide du composé dont il faut déterminer l'indice de viscosité étant neutralisée à 100 % par la soude puis diluée à 50 g/l dans de l'eau bipermutée, et **en ce que** ledit agent est un homopolymère de l'acide acrylique ou un copolymère hydrosoluble de l'acide acrylique avec un ou plusieurs monomères acryliques, vinyliques ou allyliques choisi parmi l'acide méthacrylique, l'acide itaconique, l'acide crotonique, l'acide furnarique, l'acide isocrotonique, aconitique, mésaconique, sinapique, undécylénique, angélique, canellique et/ou l'acide acrylamido méthyl propane sulfonique sous forme acide ou partiellement neutralisée, ou encore parmi l'acrylamide, le méthylacrylamide, les esters des acides acryliques ou méthacryliques choisis parmi l'acrylate d'éthyle, l'acrylate de butyle, le méthacrylate de méthyle, le phosphate d'acrylate ou méthacrylate d'éthylène ou propylène glycol ou bien encore parmi la vinylpyrrolidone, le vinylcaprolactame, l'isobutylène, le diisobutylène, l'acétate de vinyle, le styrène, l'alphaméthylstyrène, le styrène sulfonate de sodium, le vinylméthyléther, l'allylamine et ses dérivés.

2. Agent de dispersion de suspension aqueuse de particules minérales selon la revendication 1 **caractérisé en ce que** ledit agent est un homopolymère de l'acide acrylique sous forme partiellement neutralisée ou totalement neutralisée par un ou plusieurs agents de neutralisation disposant d'une fonction monovalente choisis dans le groupe constitué par les composés contenant des cations alcalins, en particulier le sodium et le potassium, ou encore le lithium, l'ammonium, ou bien les amines primaires ou secondaires aliphatiques et/ou cycliques telles que les éthanolamines, la mono et diéthylamine ou encore la cyclohexylamine, et éventuellement par un ou plusieurs agents de neutralisation disposant d'une fonction polyvalente choisis dans le groupe constitué par les composés contenant des cations divalents alcalino-terreux, en particulier le magnésium et le calcium, ou encore le zinc, de même que par les cations trivalents, dont en particulier l'aluminium, ou encore par certains composés contenant des cations de valence plus élevées.

3. Agent de dispersion de suspension aqueuse de particules minérales selon la revendication 1 **caractérise en ce que** ledit agent est un copolymère hydrosoluble de l'acide acrylique avec un ou plusieurs monomères acryliques, vinyliques ou allyliques sous forme partiellement neutralisée ou totalement neutralisée par un ou plusieurs agents de neutralisation disposant d'une fonction monovalente choisis dans le groupe constitué par les composés contenant des cations alcalins, en particulier le sodium et le potassium, ou encore le lithium, l'ammonium, ou bien les amines primaires ou secondaires aliphatiques et/ou cycliques telles que les éthanolamines, la mono et diéthylamine ou encore la cyclohexylamine, et éventuellement par un ou plusieurs agents de neutralisation disposant d'une fonction polyvalente choisis dans le groupe constitué par les composés contenant des cations divalents alcalino-terreux, en particulier le magnesium et le calcium, ou encore le zinc, de même que par les cations trivalents, dont en particulier l'aluminium, ou encore par certains composés contenant des cations de valence plus élevées.

4. Agent de dispersion de suspension aqueuse de particules minérales selon l'une quelconque des revendications 1 à 3 **caractérisé en ce que** ledit agent est un homopolymère de l'acide acrylique et/ou copolymères hydrosoluble de l'acide acrylique avec un ou plusieurs monomères acryliques, vinyliques ou allyliques ayant un poids moléculaire correspondant à un indice de viscosité d'une valeur allant de 0,20 à 0,60.

5. Procédé de mise en suspension aqueuse de particules minérales issues d'une étape de reconcentration mécanique et/ou thermique consécutive à une étape de broyage par voie humide sans usage de dispersant et faiblement concentrée en matière sèche **caractérisé en ce qu'**il comprend la mise en oeuvre de l'agent de dispersion de suspension aqueuse selon l'une quelconque des revendications 1 à 4.

6. Procédé de mise en suspension aqueuse de particules selon la revendication 5 **caractérisé en ce que** l'agent de dispersion de suspension aqueuse selon l'une quelconque des revendications 1 à 4 est introduit à raison de 0,1 % à 2 % en poids sec par rapport au poids sec de matière minérale, et préférentiellement de 0,3 % à 1,0 % en poids sec.

7. Utilisation d'homopolymères de l'acide acrylique et/ou copolymères hydrosolubles de l'acide acrylique avec un ou plusieurs monomères acryliques, vinyliques ou allyliques comme agent de dispersion de suspension aqueuse de particules minérales issues d'une étape de reconcentration mécanique et/ou thermique consécutive à une étape de broyage par voie humide sans usage de dispersant et faiblement concentrée en matière sèche **caractérisée en ce que** on ajoute, sous agitation, à ladite suspension aqueuse, un agent selon l'une quelconque des revendications 1 à 4.

**8.** Utilisation d'homopolymères de l'acide acrylique et/ou copolymères hydrosolubles de l'acide acrylique avec un ou plusieurs monomères acryliques, vinyliques ou allyliques selon la revendication 7 **caractérisée en ce que** ledit agent est introduit à raison de 0,1 % à 2 % en poids sec par rapport au poids sec de matière minérale, et préférentiellement de 0,3 % à 1,0 % en poids sec.

**9.** Utilisation d'homopolymères de l'acide acrylique et/ou copolymères hydrosolubles de l'acide acrylique avec un ou plusieurs monomères acryliques, vinyliques ou allyliques selon l'une quelconque des revendications 7 ou 8 **caractérisée en ce que** les particules minérales issues d'une étape de reconcentration mécanique et/ou thermique consécutive à une étape de broyage par voie humide sans usage de dispersant et faiblement concentrée en matière sèche sont choisies parmi les carbonates de calcium synthétiques ou les carbonates de calcium naturels tels que la craie, la calcite, le marbre ou encore la dolomie ou leurs mélanges.

**10.** Suspension aqueuse de particules minérales issues d'une étape de reconcentration mécanique et/ou thermique consécutive à une étape de broyage par voie humide sans usage de dispersant et faiblement concentrée en matière sèche **caractérisée en ce qu'**elle contient 0,1 % à 2 % en poids sec, par rapport au poids sec de matière minérale, de l'agent de dispersion de suspension aqueuse selon l'une quelconque des revendications 1 à 4, et préférentiellement 0,3 % à 1,0 % en poids sec.

**11.** Suspension aqueuse de particules minérales selon la revendication 10 **caractérisée en ce que** les particules minérales sont choisies parmi les carbonates de calcium synthétiques ou les carbonates de calcium naturels tels que la craie, la calcite, le marbre ou encore la dolomie ou leurs mélanges.

**12.** Suspension aqueuse de particules minérales selon l'une quelconque des revendications 10 ou 11 **caractérisée en ce qu'**elle présente une concentration en matière sèche d'au moins 60 % avec une viscosité Brookfield strictement intérieure à 2000 mPa.s. mesurée à 100 tours par minute immédiatement après la mise en suspension et une viscosité Brookfield strictement inférieure à 20 000 mPa.s. mesurée à 10 tours par minute après huit jours de stockage sans agitation.

**13.** Utilisation de la suspension aqueuse selon l'une quelconque des revendications 10 à 12 dans les domaines de la charge de masse et du couchage du papier ainsi que de la peinture, de la céramique, des boues de forage, des charges pour caoutchoucs et résines synthétiques, des formulations détergentes et nettoyantes, les ciments, les plâtres et autres domaines d'application du génie civil, du bâtiment et des travaux publics.

**Claims**

**1.** A dispersion agent for an aqueous suspension of mineral particles derived from a step of mechanical and/or thermal reconcentration subsequent to a step of wet-grinding without the use of a dispersant, and having a low concentration of dry solids, **characterized in that** said agent is a homopolymer of acrylic acid or a water-soluble copolymer of acrylic acid with one or more acrylic, vinylic, or allylic monomers having a viscosity index ranging from 0.08 to 0.80, the viscosity index being determined using a Schott AVS/500 viscometer equipped with an Ubbelohde tube whose reference is 53010/I and whose constant is 0.01, and corresponding to the limit of the specific viscosity of the homopolymer or copolymer solution as the concentration of homopolymers or copolymers approaches 0, the acidic form of the compound whose viscosity index must be determined being 100% neutralized by sodium and then diluted to 50 g/L in bipermutated water, and **in that** said agent is a homopolymer of acrylic acid or a water-soluble copolymer of acrylic acid with one or more acrylic, vinylic, or allylic monomers chosen from among methacrylic acid, itaconic acid, crotonic acid, fumaric acid, isocrotonic acid, aconitic, mesaconic, sinapic, undecylenic, angelic, canellic and/or acrylamido-methylpropane sulfonic acid in an acidic or partially neutralized form, or from among acrylamide, methacrylamide, esters of acrylic or methacrylic acids chosen from among ethyl acrylate, butyl acrylate, methyl methacrylate, acrylate phosphate or ethylene methacrylate or glycol propylene, or from among vinylpyrrolidine, vinylcaprolactame, isobutylene, diisobutylene, vinyl acetate, styrene, alphamethylstyrene, sodium styrene sulfonate, vinylmethylether, allylamine and its derivatives.

**2.** A dispersion agent for an aqueous suspension of mineral particles according to claim 1, **characterized in that** said agent is a homopolymer of acrylic acid in a form fully or partially neutralized by one or more neutralization agents having a monovalent function chosen from the group made up of compounds containing alkaline cations, in particular sodium and potassium, or lithium, ammonium, or primary or secondary aliphatic and/or cyclic amines such as ethanolamines, mono- and diethylamine, or cyclohexamine; and potentially by one or more neutralization agents having a polyvalent function chosen from the group containing divalent alkaline-earth cations, in particular magnesium and calcium, or zinc; or likewise by trivalent cations, particularly including aluminum; or by certain compounds containing higher-valence cations.

**3.** A dispersion agent for an aqueous suspension of mineral particles according to claim 1, **characterized in that** said agent is a water-soluble copolymer of acrylic acid with one or more acrylic, vinylic or allylic monomers in a form fully or partially neutralized by one or more neutralization agents having a monovalent function chosen from the group made up of compounds containing alkaline cations, in particular sodium and potassium, or lithium, ammonium, or primary or secondary aliphatic and/or cyclic amines such as ethanolamines, mono- and diethylamine, or cyclohexamine; and potentially by one or more neutralization agents having a polyvalent function chosen from the group containing divalent alkaline-earth cations, in particular magnesium and calcium, or zinc; or likewise by trivalent cations, particularly including aluminum; or by certain compounds containing higher-valence cations.

**4.** A dispersion agent for an aqueous suspension of mineral particles according to any one of the claims 1 to 3, **characterized in that** said agent is a homopolymer of acrylic acid and/or a water-soluble copolymer of acrylic acid with one or more acrylic, vinylic or allylic monomers having a molecular weight corresponding to a viscosity index ranging from 0.20 to 0.60.

**5.** A method for placing into an aqueous suspension mineral particles derived from a step of mechanical and/or thermal reconcentration subsequent to a step of wet-grinding without the use of a dispersant, and having a low concentration of dry solids, **characterized in that** it comprises the implementation of the aqueous suspension dispersion agent according to any one of the claims 1 to 4.

**6.** A method for placing into an aqueous suspension mineral particles according to claim 5, **characterized in that** the aqueous suspension dispersion agent according to any one of the claims 1 to 4 is added in an amount of 0.1 % to 2% by dry weight in relation to the dry weight of the mineral material, and preferentially 0.3% to 1.0% by dry weight.

**7.** The use of homopolymers of acrylic acid and/or water-soluble copolymers of acrylic acid with one or more acrylic, vinylic or allylic monomers as a dispersion agent for an aqueous suspension of mineral particles derived from a step of mechanical and/or thermal reconcentration subsequent to a step of wet-grinding without the use of a dispersant, and having a low concentration of dry solids, **characterized in that**, during agitation, an agent according to one of the claims 1 to 4 is added to said aqueous suspension.

**8.** The use of homopolymers of acrylic acid and/or water-soluble copolymers of acrylic acid with one or more acrylic, vinylic or allylic monomers according to claim 7, **characterized in that** said agent is added in an amount of 0.1 % to 2% by dry weight in relation to the dry weight of the mineral material, and preferentially in an amount of 0.3% to 1.0% by dry weight.

**9.** The use of homopolymers of acrylic acid and/or water-soluble copolymers of acrylic acid with one or more acrylic, vinylic or allylic monomers according to one of the claims 7 or 8, **characterized in that** the mineral particles derived from a step of mechanical and/or thermal reconstruction subsequent to a step of wet-grinding without the use of a dispersant, and having a low concentration of dry solids, are chosen from among synthetic calcium carbonates or natural calcium carbonates such as chalk, calcite, marble or dolomite, or mixtures thereof.

**10.** An aqueous suspension of mineral particles derived from a step of mechanical and/or thermal reconcentration subsequent to a step of wet-grinding without the use of a dispersant, and having a low concentration of dry solids, **characterized in that** it contains 0.1% to 2% by dry weight, in relation to the dry weight of the mineral material, of the aqueous suspension dispersion agent according to one of the claims 1 to 4, and preferentially 0.3% to 1.0% by dry weight.

**11.** An aqueous suspension of mineral particles according to claim 10, **characterized in that** the mineral particles are chosen from among synthetic calcium carbonates or natural calcium carbonates such as chalk, calcite, marble or dolomite, or mixtures thereof.

**19**

**12.** An aqueous suspension of mineral particles according to one of the claims 10 or 11, **characterized in that** it has a concentration of dry solids of at least 60%, with a Brookfield viscosity strictly less than 2000 mPa.s measured at 100 revolutions per minute immediately after suspension, and a Brookfield viscosity strictly less than 20,000 mPa.s measured at 10 revolutions per minute after eight days of storage without agitation.

**13.** The use of the aqueous suspension according to one of the claims 10 to 12 in the fields of fillers and paper coatings, as well as the fields of paints, ceramics, drilling muds, fillers for synthetic resins and rubbers, cleaning and detergent formulas, cements, plasters, and other fields of application for civil engineering, construction, and public works.

**Patentansprüche**

**1.** Dispergiermittel einer wässrigen Suspension mineralischer Partikel, welche aus einem erneuten mechanischen und/oder thermischen Konzentrationsvorgang im Anschluss an einen Nassmahlvorgang ohne Verwendung eines Dispergiermittels und mit schwach konzentrierter Trockenmasse entstanden sind,
**dadurch gekennzeichnet, dass** das besagte Mittel ein Homopolymer der Acrylsäure oder ein wasserlösliches Copolymer der Acrylsäure mit einem oder mehreren Acryl-, Vinyl-oder Allylmonomeren mit einem Viskositätsindexwert zwischen 0,08 und 0,80, wobei der Viskositätsindex anhand eines Viskosimeters Schott AVS/500, ausgestattet mit einer Ubbelohde-Röhre der Referenz 53010/I und einer Konstanten 0,01, bestimmt wird und dem Grenzwert der spezifischen Viskosität der Homopolymer- oder Copolymerlösung entspricht, wenn die Homopolymer- oder Copolymerkonzentration nach 0 tendiert, wobei die saure Form der Verbindung, deren Viskositätsindex zu bestimmen ist, zu 100 % von Natrium neutralisiert und anschließend zu 50 g/l in durch zweifachen Ionenaustausch gereinigtes Wasser verdünnt wird, ist, und dass das besagte Mittel ein Homopolymer der Acrylsäure oder ein wasserlösliches Copolymer der Acrylsäure mit einem oder mehreren Acryl-, Vinyl- oder Allylmonomeren, gewählt unter Methacrylsäure, Itakonsäure, Crotonsäure, Furnarsäure, Isocrotonsäure, Aconitsäure, Mesaconsäure, Sinapinsäure, Undecylensäure, Angelikasäure, Zimtsäure und/oder AcrylamidoMethylpropansulfonsäure in saurer Form oder teilweise neutralisiert, oder auch unter Acrylamid, Methylacrylamid, Estern der Acryl- oder Methacrylsäuren, gewählt unter Ethylacrylat, Butylacrylat, Methylmethacrylat, Acrylatphosphat oder Ethylenmethacrylat oder Propylenglykol oder auch unter Vinylpyrolidon, Vinylcaprolaktam, Isobutylen, Diisobutylen, Vinylacetat, Styrol, Alpha-Methylstyrol, Styrol-Natriumsulfonat, Vinylmethylether, Allylamin und dessen Derivate, ist.

**2.** Dispergiermittel einer wässrigen Suspension mineralischer Partikel nach Anspruch 1, **dadurch gekennzeichnet, dass** das besagte Mittel ein Homopolymer der Acrylsäure ist, welches durch ein oder mehrere Neutralisierungsmittel mit einer monovalenten Funktion, gewählt aus der Gruppe der alkalischen Kationen, insbesondere Natrium und Kalium, oder auch Lithium, Ammonium oder aliphatische und/oder zyklische Primär- oder Sekundäramine wie Ethanolamine, Mono- und Diethylamin oder auch Cyclohexylamin enthaltenden Verbindungen, oder eventuell durch ein oder mehrere Neutralisierungsmittel mit einer polyvalenten Funktion, gewählt aus der Gruppe der Verbindungen, welche divalente erdalkalische Katione, insbesondere Magnesium und Calcium oder auch Zink enthalten, sowie durch trivalente Katione, darunter insbesondere Aluminium, oder auch durch bestimmte Verbindungen, welche Katione mit höheren Valenzen enthalten, teilweise oder vollständig neutralisiert wird.

**3.** Dispergiermittel einer wässrigen Suspension mineralischer Partikel nach Anspruch 1, **dadurch gekennzeichnet, dass** das besagte Mittel ein wasserlösliches Copolymer der Acrylsäure mit einem oder mehreren Acryl-, Vinyl- oder Allylmonomeren ist, welches durch ein oder mehrere Neutralisierungsmittel mit einer monovalenten Funktion, gewählt in der Gruppe von Verbindungen, welche alkalische Katione, insbesondere Natrium und Kalium, oder auch Lithium, Ammonium oder auch aliphatische und/oder zyklische Primär-und Sekundäramine wie Ethanolamine, Mono- und Diethylamine oder auch Cyclohexylamine enthalten, oder eventuell durch ein oder mehrere Neutralisierungsmittel, welche über eine polyvalente Funktion verfügen und in der Gruppe der Verbindungen, welche divalente erdalkalische Katione, insbesondere Magnesium und Calcium, oder auch Zink gewählt werden, sowie durch trivalente Katione, darunter insbesondere Aluminium, oder auch durch bestimmt Verbindungen, welche Katione mit höheren Valenzen aufweisen, teilweise oder vollständig neutralisiert wird.

**4.** Dispergiermittel einer wässrigen Suspension mineralischer Partikel nach einem beliebigen der Ansprüche 1 bis 3, **dadurch gekennzeichnet, dass** das besagte Mittel ein Homopolymer der Acrylsäure und/oder ein wasserlösliches Copolymer der Acrylsäure mit einem oder mehreren Acryl-, Vinyl- oder Allylmonomeren ist, dessen Molekulargewicht einem Viskositätsindexwert zwischen 0,20 bis 0,60 entspricht.

**5.** Verfahren zum Versetzen von mineralischen Partikeln, welche aus einem erneuten mechanischen und/oder thermischen Konzentrationsvorgang im Anschluss an einen Nassmahlvorgang ohne Verwendung eines Dispergiermittels und mit schwach konzentrierter Trockenmasse entstanden sind, in eine wässrige Suspension, **dadurch gekennzeichnet, dass** es den Einsatz des Dispergiermittels einer wässrigen Suspension nach einem beliebigen der Ansprüche 1 bis 4 umfasst.

6. Verfahren zum Versetzen von mineralischen Partikeln in eine wässrige Suspension nach Anspruch 5, **dadurch gekennzeichnet, dass** das Dispergiermittel der wässrigen Suspension nach einem beliebigen der Ansprüche 1 bis 4 mit 0,1 bis 2 Trockengewichtprozent im Verhältnis zum Trockengewicht des Mineralstoffs, und vorzugsweise mit 0,3 bis 1,0 Trockengewichtprozent, beigemischt wird.

7. Verwendung von Homopolymeren der Acrylsäure und/oder wasserlöslichen Copolymeren der Acrylsäure mit einem oder mehreren Acryl-, Vinyl- oder Allylmonomeren als Dispergiermittel einer wässrigen Suspension mineralischer Partikel, welche aus einem erneuten mechanischen und/oder thermischen Konzentrationsvorgang im Anschluss an einen Nassmahlvorgang ohne Verwendung eines Dispergiermittels und mit schwach konzentrierter Trockenmasse entstanden sind, **dadurch gekennzeichnet, dass** man der wässrigen Suspension unter Schütteln ein Mittel nach einem beliebigen der Ansprüche 1 bis 4 beimischt.

8. Verwendung von Homopolymeren der Acrylsäure und/oder wasserlöslichen Copolymeren der Acrylsäure mit einem oder mehreren Acryl-, Vinyl- oder Allylmonomeren nach Anspruch 7, **dadurch gekennzeichnet, dass** das besagte Mittel mit 0,1 bis 2 Trockengewichtprozent im Verhältnis zum Trockengewicht des Mineralstoffs, und vorzugsweise mit 0,3 bis 1,0 Trockengewichtprozent, beigemischt wird.

9. Verwendung von Homopolymeren der Acrylsäure und/oder wasserlöslichen Copolymeren der Acrylsäure mit einem oder mehreren Acryl-, Vinyl- oder Allylmonomeren nach einem beliebigen der Ansprüche 7 oder 8, **dadurch gekennzeichnet, dass** die mineralischen Partikel, welche aus einem erneuten mechanischen und/oder thermischen Konzentrationsvorgang im Anschluss an einen Nassmahlvorgang ohne Verwendung eines Dispergiermittels und mit schwach konzentrierter Trockenmasse entstanden sind, unter den synthetischen Calciumcarbonaten oder den natürlichen Calciumcarbonaten wie beispielsweise Kreide, Kalzit, Marmor oder auch Dolomit oder deren Mischung gewählt werden.

10. Wässrige Suspension mineralischer Partikel, welche aus einem erneuten mechanischen und/oder thermischen Konzentrationsvorgang im Anschluss an einen Nassmahlvorgang ohne Verwendung eines Dispergiermittels und mit schwach konzentrierter Trockenmasse entstanden sind, **dadurch gekennzeichnet, dass** sie 0,1 bis 2 Trockengewichtprozent, im Verhältnis zum Trockengewicht des Mineralstoffs, des Dispergiermittels der wässrigen Suspension nach einem beliebigen der Ansprüche 1 bis 4, und vorzugsweise 0,3 bis 1,0 Trockengewichtprozent, enthält.

11. Wässrige Suspension mineralischer Partikel nach Anspruch 10, **dadurch gekennzeichnet, dass** die mineralischen Partikel unter den synthetischen Calciumcarbonaten oder den natürlichen Calciumcarbonaten wie beispielsweise Kreide, Kalzit, Marmor oder auch Dolomit oder deren Mischung gewählt werden.

12. Wässrige Suspension mineralischer Partikel nach einem beliebigen der Ansprüche 10 oder 11, **dadurch gekennzeichnet, dass** sie eine Trockenmassenkonzentration von mindestens 60 % mit einer Brookfield-Viskosität, welche bei 100 U/min. sofort nach dem Versetzen in die Suspension gemessen, strikt unter 2000 mPa.s. liegt, und mit einer Brookfield-Viskosität, welche nach einer Lagerung ohne Schütteln von acht Tagen bei 10 U/min. gemessen, strikt unter 20 000 mPa.s. liegt, aufweist.

13. Verwendung der wässrigen Suspension nach einem beliebigen der Ansprüche 10 bis 12 im Bereich der Massenbelastung und der Kaschierung von Papier sowie für Farben, Keramik, Bohrschlämme, für die Belastung von Gummis und synthetischen Harzen, für die Formulierung von Detergenzien und Waschmitteln, für Zemente und Gipse sowie in weiteren Anwendungsbereichen des Hoch- und Tiefbaus, der Bauindustrie und der öffentlichen Arbeiten.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2603042
- EP 0100947 A
- EP 0127388 A
- EP 0129329 A
- EP 0542644 A
- FR 2488814
- EP 0100948 A
- EP 0542643 A
- EP 0850685 A